# EUROPEAN PATENT SPECIFICATION

(11) **EP 4 432 633 B1**
(45) Date of publication and mention of the grant of the patent: **06.08.2025**
(21) Application number: 24162897.3
(22) Date of filing: 12.03.2024
(51) Int. Cl.: H04L 67/12, H04L 69/08, H04L 69/14, H04L 69/18, B60K 35/28, B60K 35/85

(54) **DATA TRANSMISSION BY INTELLIGENT COCKPIT SYSTEM**
DATENÜBERTRAGUNG DURCH INTELLIGENTES COCKPITSYSTEM
TRANSMISSION DE DONNÉES PAR SYSTÈME DE COCKPIT INTELLIGENT

(30) Priority: 16.03.2023 CN 202310258833
(43) Date of publication of application: 18.09.2024
(73) Proprietor: NIO Software Technology (Shanghai) Co., Ltd., Shanghai 201101 (CN)
(72) Inventor: ZHANG, Huimin, Shanghai, 201101 (CN)
(74) Representative: Vossius & Partner Patentanwälte Rechtsanwälte mbB

(56) References cited:
- WO-A1-2022/000513
- WO-A1-2022/011725
- CN-A- 115 277 750

## Description

### Technical Field

The disclosure relates to the communication technologies, and specifically provides a data transmission method, apparatus, a vehicle system, and a medium.

### Background Art

In-Vehicle Infotainment, referred to as IVI, is an in-vehicle infotainment system that uses a vehicle-specific central processing unit and is formed based on a vehicle body bus system and an Internet service. IVI can implement a series of applications such as three-dimensional navigation, real-time road conditions, IPTV, vehicle information, body control, mobile office, wireless communication, online entertainment functions, and TSP services, and greatly improves the electronic, networked, and intelligent level of a vehicle.

With the gradual development of new energy vehicles, independent IVI systems are gradually integrated into a central compute cluster-zone controller architecture. In such a vehicle electrical and electronic (EE) architecture, a central computing platform CCC assumes the role of the "brain" of a vehicle, and is responsible for computing tasks of a vehicle advanced driver assistance system (ADAS), an intelligent cockpit system, and a vehicle control system. Among them, the intelligent cockpit system is a more advanced IVI system.

In order to solve the problems of weak performance, long update cycle, difficulty in upgrading, and high costs of the chips used in the in-vehicle CCC, a conventional heterogeneous and upgradable intelligent cockpit system architecture has been provided to have the IVI physically divided into a cockpit domain functional (CDF) unit and a multimedia system functional (MSF) unit. The CDF unit remains in a CCC box, which meets automotive grade standards. The MSF unit is separated into an independent box, which does not meet automotive grade standards. The CDF unit and the MSF unit are isolated devices, and coordination and cooperation between the CDF unit and the MSF unit remain troublesome. As such, there is a need for data to be transmitted between two physically isolated devices with a specific transmission distance.

WO 2022/000513 A1 relates to the field of communications technologies and provides a communications method and apparatus. This may be used for assisted driving and autonomous driving.

WO 2022/011725 A1 provides a data transmission method and an apparatus, and relates to the field of communications technologies, and in particular, to short-range communication, for example, a cockpit domain.

### Summary

The subject-matter of the present invention is defined by the features of the independent claims. Further preferred embodiments of the present invention are defined in the dependent claims.

### Brief Description of the Drawings

The disclosed content of the disclosure will become more readily understood with reference to the accompanying drawings. Those skilled in the art readily understand that these accompanying drawings are merely for illustrative purposes and are not intended to limit the scope of protection of the disclosure. In addition, similar components are represented by similar numbers in the figures, in which:
FIG. 1 is a schematic flowchart of main steps of a data transmission method according to an embodiment of the disclosure;
FIG. 2 is a schematic flowchart of main steps of a data transmission method according to another embodiment of the disclosure;
FIG. 3 is a schematic flowchart of main steps of a data transmission method according to another embodiment of the disclosure;
FIG. 4 is a schematic diagram of physical connection between a CDF unit and an MSF unit according to an embodiment of the disclosure;
FIG. 5 is a schematic diagram of physical connection of related hardware of a CDF unit and an MSF unit in an artificial intelligence assistant scenario according to an embodiment of the disclosure;
FIG. 6 is a schematic diagram of a data transmission process between a CDF unit and an MSF unit in an artificial intelligence assistant scenario according to an embodiment of the disclosure; and
FIG. 7 is a schematic diagram of a structure layer of a data transmission system according to an embodiment of the disclosure.

### Detailed Description

Some implementations of the disclosure are described below with reference to the accompanying drawings. Those skilled in the art should understand that these implementations are only used to explain the technical principles of the disclosure, and are not intended to limit the scope of protection of the invention, whose scope is defined by the appended claims.

In the description of the disclosure, a "module" or "processor" may include hardware, software, or a combination thereof. A module may include a hardware circuit, various suitable sensors, a communication port, and a memory, or may include a software part, for example, program code, or may be a combination of software and hardware. The processor may be a central processing unit, a microprocessor, a graphics processing unit, a digital signal processor, or any other suitable processor. The processor has a data and/or signal processing function. The processor may be implemented in software, hardware, or a combination thereof. A non-transitory computer-readable storage medium includes any suitable medium that may store program codes, for example, a magnetic disk, a hard disk, an optical disc, a flash memory, a read-only memory, or a random access memory. The term "A and/or B" indicates all possible combinations of A and B, for example, only A, only B, or A and B. The term "at least one of A or B" or "at least one of A and B" has a meaning similar to "A and/or B" and may include only A, only B, or A and B. The terms "a/an" and "this" in the singular form may also include the plural form.

Some terms in the disclosure are explained herein first.

CCC: A central compute cluster, which is a central computing platform of an onboard computer, includes three main components: CDF/ADF/VDF.

CDF: A cockpit domain functional unit, also known as an intelligent cockpit domain controller (CDC), is used for a control/computing chip of an intelligent cockpit of a vehicle. In the disclosure, for convenience of interpretation, both the CDF unit and the CDC refer to a cockpit domain functional unit.

MSF: A multimedia system functional unit may also be referred to as an in-vehicle infotainment (IVI) system conventionally. In the conventional automobile industry, the IVI is used to implement three-dimensional navigation, real-time traffic condition, IPTV, and other entertainment functions. However, in the disclosure, the MSF is given a brand-new concept, which excludes the conventional entertainment functions of general vehicles and specifically refers to the application of multimedia audio and video functional units in a vehicle.

Automotive grade: Functionality and reliability standard requirements proposed for electronic elements used in a vehicle include requirements such as an operating temperature range, working stability, a defective rate, and the like. Chips that meet automotive grade standards need to pass a series of certifications to obtain related certificates.

USB3 Gen2: USB-IF, that is, the USB Implementers Forum, named the standard division of the USB protocol. From USB1.0, USB2.0, USB3, USB4, and the like, there are different technology names for different technical standards. USB3 Gen2 is generally a technical standard that uses a third generation USB standard protocol and has a transmission rate of around 10 Gbps. A transmission rate of USB 4.0 can even reach 40 Gbps.

DP: A display port is an interface used to transmit an image display signal from a chip to an LCD display. The DP interface may also transmit mixed video and audio signals. Functionally, an HDMI and the DP are the same.

Ethernet: Vehicle Ethernet mainly refers to the use of an Ethernet local area networking technology to replace a conventional vehicle CAN bus to implement joint networking, information exchange, and control functions of distributed control units throughout the vehicle.

Currently, in the cooperation between the CDF unit and the MSF unit, a major consideration is how to transmit data between two physically isolated devices with a specific transmission distance. Due to the demands of the applications being used, data transmitted between the two devices may be raw video data collected by a camera or raw audio data collected by a microphone. The data has the characteristics of a high bandwidth, a low delay, a large data amount, and a long transmission distance. In order to meet different demands of a user, it is necessary to solve the requirements for two-way transmission of raw audio and video data from the CDF unit to the MSF unit, and from the MSF unit to the CDF unit. It is also necessary to solve the two-way transmission of control signals and bulk data transmission between the two devices. However, there is no readily available communication transmission mechanism to meet the transmission demands. Therefore, a data transmission method to solve the above problems is needed.

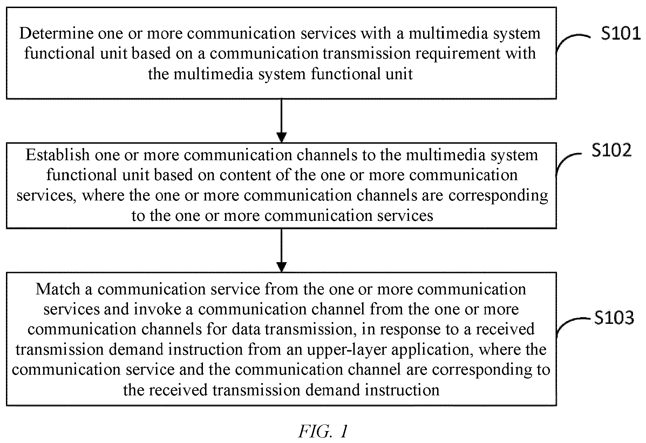

Reference is made to FIG. 1, which is a schematic flowchart of main steps of a data transmission method according to an embodiment of the disclosure. As shown in FIG. 1, the data transmission method according to this embodiment of the disclosure may be used by a cockpit domain functional unit of a heterogeneous intelligent cockpit system, where the heterogeneous intelligent cockpit system includes a multimedia system functional unit, and the cockpit domain functional unit and the multimedia system functional unit are heterogeneously arranged. The method mainly includes step S101 to step S103 as follows:
In step S101, one or more communication services with the multimedia system functional unit are determined based on a communication transmission requirement with the multimedia system functional unit.

In this embodiment, a communication service independent of an underlying transmission channel is constructed between the heterogeneous cockpit CDF unit and the MSF unit based on the communication transmission requirement with the MSF unit. This communication service can subsequently determine communication transmission channels with various service levels based on demands of the upper-layer application, and corresponding underlying communication channels can be invoked for data transmission for the upper-layer application.

In one implementation, the communication transmission requirement may include: a requirement for a communication service type, a requirement for a data transmission direction, a requirement for QoS quality, a requirement for an error check, and content of the determined communication service being consistent with the communication transmission requirement. For example, a communication transmission requirement for transmitting unencoded raw audio and video data from the CDF unit to the MSF unit is as follows: The CDF unit is a computing platform integrated in the CCC, all sensing devices inside the cockpit are connected to the CDF unit. The vehicle cockpit uses an in-cabin camera to collect internal video data and an in-cabin microphone to collect internal audio data. The characteristics of the data is that the data has not been compressed through a video and audio coding scheme and thus has a very large data amount. At the same time, a delay of the data is required to be as small as possible to meet a real-time feedback requirement, and an error check is not required. Therefore, a communication service between the CDF unit and the MSF unit may be determined as having a communication service type being mixed audio and video data, a data transmission direction being from the CDF unit to the MSF unit, QoS quality being a high bandwidth and a low delay, and an error check field identifier being not required.

For another example, a communication transmission requirement of bulk data between the CDF unit and the MSF unit is different from the transmission requirement of the audio and video data. The characteristic of the bulk data transmission is to support transmission of a large amount of data within an uncertain time. This needs to ensure accurate transmission of data, which requires an error check, but does not require a high bandwidth and a low delay. Therefore, a communication service between the CDF unit and the MSF unit may be determined as having a communication service type being Bulk, a data transmission direction being two-way transmission, QoS quality being a high bandwidth and high reliability, and an error check field identifier being required.

Another example is a requirement of two-way transmission of control signals between the CDF unit and the MSF unit. **In** addition to transmission of high-speed multimedia data streams, between the CDF unit and the MSF unit, it is also necessary to implement two-way transmission of control signals to implement control functions such as service registration, service discovery, and service connection. Two-way transmission of control signals are characterized by a particularly high delay requirement and no transmission error, and therefore, an error code check mechanism needs to be added. Therefore, a communication service between the CDF unit and the MSF unit may be determined as having a communication service type being a control signal, a data transmission direction being two-way transmission, QoS quality being a low latency and high reliability, and an error check field identifier being required.

In one implementation, each of the one or more communication services corresponds to a unique service ID, so that it is convenient to search for the corresponding communication service, and the subsequently-established corresponding communication channel can also be invoked through the unique service ID. For example, a communication service with a service ID being 1 has: a communication service type being mixed audio and video data, a data transmission direction being from the CDF unit to the MSF unit, QoS quality being a high bandwidth and a low delay, and an error check field identifier being not required.

In one implementation, all communication transmission capabilities must meet the requirements for long-distance data transmission. Since the MSF unit and the CDF unit are physically located inside different electronic control unit boxes, the distance between the MSF unit and the CDF unit can range from 0.5 meter to 15 meters. Therefore, data cannot be transmitted by high-speed signal lines inside a PCB board, but can be transmitted by vehicle-mounted wired communication cables. Therefore, communication cables that meet the electrical characteristics requirements for automotive use need to be selected to implement long-distance data transmission.

In step S102, one or more communication channels are established to the multimedia system functional unit based on content of the one or more communication services, where the one or more communication channels are corresponding to the one or more communication services.

In this embodiment, the corresponding matching communication channel is established based on the content of the communication service described in step S 101. Since there is no standard two-way transmission channel available between the MSF unit and the CDF unit in a heterogeneous intelligent cockpit architecture, the MSF unit and the CDF unit can rely on existing communication modes for data transmission. Therefore, the subject matter disclosed herein can be used to provide a communication service independent of an underlying communication mode for an upper-layer service to invoke a corresponding communication channel for data transmission. In this way, the communication service disclosed herein eliminates the coexistence problem of a plurality of communication modes.

In one implementation, the content of the communication service may include: a communication service type, a data transmission direction, QoS quality, an error check field identifier, and a corresponding service ID, provided that an established communication channel is corresponding to a transmission demand for the content of the communication service. For example, a communication service with a service ID being 1 includes: a communication service type being mixed audio and video data, a data transmission direction being from the CDF unit to the MSF unit, QoS quality being a high bandwidth and a low delay, and an error check field identifier being not required. A communication channel established for communication service with the service ID being 1 is named channel A. The channel is for one-way transmission, and is characterized by a high transmission bandwidth, a low delay, a large data amount, error code correction (ECC) check being not required, and data being transmitted in a stream mode. Accordingly, channel A can be invoked for DP signal transmission. As a DP signal does not require a serializer/deserializer to serve as a bridge at both ends of the communication channel, a DP signal can be directly transmitted from a data transmit end to a signal receive end. FPDlink and GSML are two other alternative types of signals that can be transmitted through channel A. Because FPDlink and GSML are characterized in that a serializer-and-deserializer pair needs to be added between a transmit end and a receive end, this communication channel requires a transmission rate as high as 30 Gbps or more, may have a transmission distance from 0.5 meter to 2 meters, and may transmit mixed video and audio signals.

For another example, a communication service with a service ID being 3 includes: a communication service type being Bulk, a data transmission direction being two-way transmission, QoS quality being a high bandwidth and high reliability, and an error check field identifier being required. A communication channel established for communication service with the service ID being 3 is named channel C. The channel is for two-way transmission, and is characterized by a high transmission bandwidth, high reliability, a large data amount, ECC check being required, and data being transmitted in a bulk mode. Such data transmission can tolerate a delay and does not require data to be transmitted in a stream mode. USB is an alternative. Under the current technical conditions, in order to meet requirements of an in-vehicle environment, a USB version may be USB3.1 Gen2 (10 Gbps), and have a transmission distance that cannot be greater than 2 meters.

For another example, a communication service with a service ID being 4 includes: a communication service type being a control signal, a data transmission direction being two-way transmission, QoS quality being a low latency and high reliability, and an error check field identifier being required. A communication channel established for communication service with the service ID being 4 is named channel D. The channel is for two-way transmission, and is characterized by a low bandwidth, a low delay, high reliability, and ECC check being required. This is characterized in that transmission needs to be correct and needs to be performed in a timely manner, a delay cannot be tolerated, but an amount of data is very small. Accordingly, channel D can be invoked for USB data transmission (control mode, which is a control transmission mode specified by the USB protocol). The control signal may also be transmitted through a reverse transmission control channel of FPDlink or GSML. If there is a one-way transmission channel from the CDF unit to the MSF unit, this reverse transmission control channel is actually provided by FPDlink or GSML. Without changing the transmission cable, FPDlink or GSML may insert a control signal frame of reverse transmission into a main data frame of one-way transmission, thereby implementing reverse transmission. That is, the function of channel D can be implement through channel A. In other words, channel A may be invoked through a communication service having a service ID being 4 or a need for reverse transmission.

For another example, the following may be alternatively selected as the communication channel based on the content of the communication service:
1. Ethernet, to be specific, vehicle Ethernet: Ethernet has a long transmission distance, low costs, and standard interfaces, but has a non-fiber transmission rate lower than 10 Gbps, or even only 1 Gbps.
2. USB 3.1 Gen2 or USB 4.0: A transmission rate of USB 3.1 Gen2 can reach 10 Gbps, and a transmission rate of USB 4.0 can even reach 40 Gbps. However, in the in-vehicle environment, transmission cables that can resist electromagnetic interference are limited, and thus have a rate no more than 10 Gbps.
3. DP: A DP interface may be used to transmit mixed audio and video signals between two devices. These signals are output from a DP tx (Source) end and received from a DP rx (Sink) end. The interface may have a transmission rate up to 32 Gbps, but can only transmit audio and video signals, and the interface can only be used for one-way transmission.
4. FPDLink: This is a proprietary protocol developed by Texas Instruments (TI), and supports high-speed video data transmission and full-duplex control of two-way control communication over a single differential link. Currently, a single-channel bandwidth of FPDlink IV can reach 12 Gbps, and a shielded twisted pair (STP) can be used for transmission. FPD link needs to work through TI's bridge converter, and is generally used to transmit high-speed video data of, for example, a camera or a display.
5. GSML: This is a proprietary protocol developed by Maxim (Maxim). Similar to FPDlink, it is also a channel that supports high-speed video data transmission and two-way control over a low-voltage differential link. Currently, a single-channel bandwidth of GSML v2 can reach 6 Gbps, and higher-speed technologies are also ready to be launched. GSML needs to work through Maxim's bridge converter, and has the same use as FPDlink.
6. MIPI A-Phy: This is a vehicle serializer/deserializer (SerDes) physical layer interface released by the MIPI Alliance, and supports long-distance and high-bandwidth data transmission in the in-vehicle environment. A current version has been V1.1 after updating, which can support single-link one-way transmission with a bandwidth of up to 16 Gbps, and can support data transmission on a two-way control channel.

In one implementation, in order to meet a requirement for long-distance data transmission between the MSF unit and the CDF unit, a communication cable used in a communication channel needs to meet automotive grade requirements. Due to the temperature tolerance of the in-vehicle environment, a requirement of resisting electromagnetic signal interference is much higher than that of an ordinary consumer electronic device. Therefore, for a demand that requires a transmission rate greater than 10 Gbps and a transmission distance greater than 2 meters, a serialization/deserialization mode is required for transmission, and a transmission cable can be an ordinary shielded twisted pair (STP). For a demand that has a lower requirement, a plurality of shielded twisted-pair cable combinations can be used for transmission. The CDF unit and the MSF unit can be bridged with each other without using a serializer/deserializer, but such cables would need to have a shielding layer and has a guaranteed signal transmission quality.

In step S103, a communication service is matched from the one or more communication services and a communication channel is invoked from the one or more communication channels for data transmission, in response to a received transmission demand instruction from an upper-layer application, where the communication service and the communication channel are corresponding to the received transmission demand instruction.

In this embodiment, sensing devices such as a camera and a microphone are connected to the CDF unit, and the MSF unit provides computing power, data collected by the CDF unit needs to be sent to the MSF unit through a forward data transmission channel, and a computing function is implemented by the MSF unit. In addition, a reverse data transmission channel is also required to transmit response information and control signals from the MSF unit to the CDF unit. There are also bulk data such as some file transfer data and USB convergence media data that need to be transmitted between the CDF unit and the MSF unit. Therefore, a corresponding communication service needs to be matched based on a data transmission demand from an upper-layer application of the CDF unit, thereby invoking a corresponding communication channel to implement data transmission. Specifically, in response to the received transmission demand instruction from the upper-layer application, a transmission requirement of data to be transmitted is obtained; the corresponding communication service is matched and a service ID of the communication service is obtained based on the transmission requirement of the data; and the corresponding communication channel is invoked through the unique service ID, and the data is transmitted to the MSF unit and/or the data is obtained from the MSF unit through the communication channel.

For example, in the scenario where an artificial intelligence assistant application is in use, the vehicle cockpit uses an in-cabin camera to collect internal video data and use an in-cabin microphone to collect internal audio data. The characteristics of the data is that the data has not been compressed through a video and audio coding scheme and thus has a very large data amount. At the same time, because the artificial intelligence assistant application imitates human conversation scenarios, it requires a delay of the data to be as small as possible to meet a real-time conversation requirement. When the artificial intelligence assistant application is in use, the CDF unit is required to transmit audio and video data from the camera and the microphone to the MSF unit. The MSF unit provides computing power to process raw audio and video data that may be collected by the CDF unit. Therefore, the artificial intelligence assistant application sends a transmission demand instruction to the CDF unit, and the CDF unit parses a transmission requirement of the data, finds a corresponding communication service, and invokes a corresponding communication channel to transmit the processed audio and video data.

In one implementation, selection of a communication service is determined based on whether the transmission requirement of data to be transmitted is consistent with content of the communication service. If the transmission requirement of the data is consistent with content of the communication service, then the communication service meets the transmission requirement of data to be transmitted, and a communication channel of the communication service is used for data transmission. If the transmission requirement of the data is not consistent with content of the communication service, searching and matching continue until a communication service that meets the transmission requirement of the data can be found. For example, transmission requirements of audio and video data that are being transmitted by the artificial intelligence assistant application include a large amount of data and the lowest possible delay. The communication service can then be selected based on whether the content of the communication service meets such requirements of a high bandwidth and a low delay.

In accordance with steps S101 to S103 as described above, a communication service independent of an underlying transmission channel is provided at the cockpit domain functional unit side based on the communication transmission requirement to transmit data between the cockpit domain functional unit and the multimedia system functional unit when they are heterogeneously arranged. The communication service can provide a corresponding communication channel to complete data transmission based on demands of the upper-layer application, thereby enabling the cockpit domain functional unit and the multimedia system functional units to cooperate with each other to implement computing power sharing and function migration.

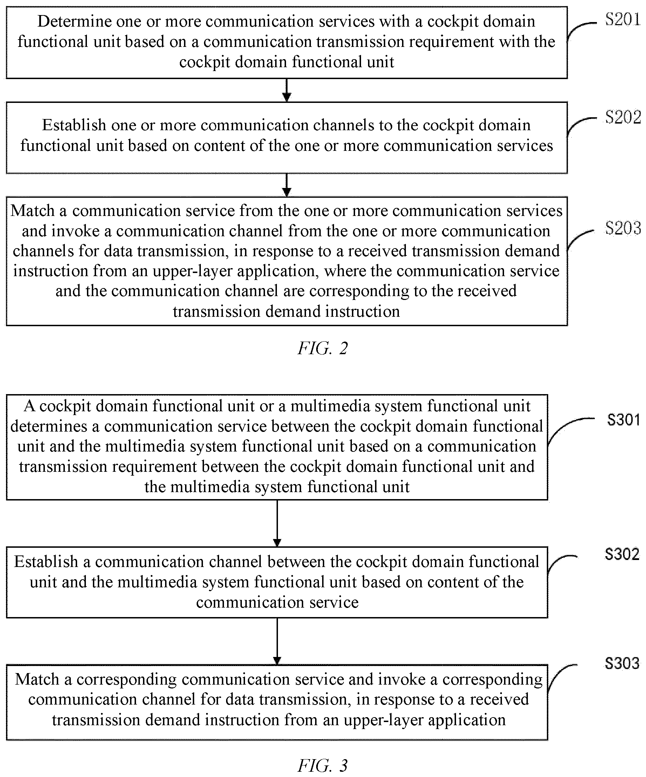

Further reference is made to FIG. 2, which is a schematic flowchart of main steps of a data transmission method according to an embodiment of the disclosure. As shown in FIG. 2, the data transmission method according to this embodiment of the disclosure may be used by a multimedia system functional unit of a heterogeneous intelligent cockpit system, where the heterogeneous intelligent cockpit system further includes a cockpit domain functional unit, and the cockpit domain functional unit and the multimedia system functional unit are heterogeneously arranged. The method mainly includes step S201 to step S203 as follows:
In step S201, one or more communication services with the cockpit domain functional unit are determined based on a communication transmission requirement with the cockpit domain functional unit.

In this embodiment, one or more communication services independent of an underlying transmission channel may be constructed between the heterogeneous cockpit CDF unit and the MSF unit based on the communication transmission requirement with the CDF unit. The communication services can subsequently facilitate one or more exchanges of specific information (i.e. data) for the upper-layer application based on demands of the upper-layer application. The MSF unit mainly provides multimedia computing power, and therefore needs to transmit associated data and control signals between the MSF unit and the CDF unit.

In one implementation, the communication transmission requirement may include: a requirement for a communication service type, a requirement for a data transmission direction, a requirement for QoS quality, a requirement for an error check, and content of the determined communication service being consistent with the communication transmission requirement. For example, a communication transmission requirement for transmitting unencoded raw audio and video data from the MSF unit to the CDF unit is as follows: Due to the need for computing power sharing between the CDF unit and the MSF unit, the MSF unit provides computing power to process the raw audio and video data collected by the CDF unit, and then generates three-dimensional virtual image data and voice data for response. The generated three-dimensional virtual image data and voice data needs to be transmitted back to the CDF unit through a same high-bandwidth and low-delay channel, and then played back by the CDF unit through a display device and an audio device. Therefore, a communication service between the MSF unit and the CDF unit may be determined as having a communication service type being mixed audio and video data, a data transmission direction being from the MSF unit to the CDF unit, QoS quality being a high bandwidth and a low delay, and an error check field identifier being not required.

For another example, data transmission from MSF unit to the CDF unit also includes transmission of bulk data and control signals. Therefore, the communication service determined based on the communication transmission requirements for transmitting the bulk data and the control signals from the MSF unit to the CDF unit is the same as the communication service determined based on the communication transmission requirements for transmitting the bulk data and the control signals from the CDF unit to the MSF unit. That is, the communication service for transmitting the bulk data has: a communication service type being Bulk, a data transmission direction being two-way transmission, QoS quality being a high bandwidth and high reliability, and an error check field identifier being required. The communication service for transmitting the control signal has: a communication service type being a control signal, a data transmission direction being two-way transmission, QoS quality being a low latency and high reliability, and an error check field identifier being required.

In one implementation, each of the one or more communication services corresponds to a unique service ID, so that it is convenient to search for the corresponding communication service based on the unique service ID, and the subsequently-established corresponding communication channel can also be invoked through the unique service ID. For example, a communication service with a service ID being 2 has: a communication service type being mixed audio and video data, a data transmission direction being from the MSF unit to the CDF unit, QoS quality being a high bandwidth and a low delay, and an error check field identifier being not required.

In one implementation, all communication transmission capabilities need to meet the requirements for long-distance data transmission. Since the MSF unit and the CDF unit are physically located inside different electronic control unit boxes, the distance between the MSF unit and the CDF unit can range from 0.5 meter to 15 meters. Therefore, data cannot be transmitted by high-speed signal lines inside a PCB board, but can be transmitted by vehicle-mounted wired communication cables. Therefore, communication cables that meet the electrical characteristics requirements for automotive use need to be selected to implement long-distance data transmission.

In step S202, one or more communication channels are established to the cockpit domain functional unit based on content of the one or more communication services.

In this embodiment, the corresponding matching communication channel is established based on the content of the communication service described in step S201. Since there is no standard two-way transmission channel available between the MSF unit and the CDF unit in a heterogeneous intelligent cockpit architecture, the MSF unit and the CDF unit can rely on existing communication modes for data transmission. Therefore, the subject matter disclosed herein can be used to provide a communication service independent of an underlying communication mode for an upper-layer service to invoke a corresponding communication channel for data transmission. In this way, the methods and systems disclosed herein eliminate the coexistence problem of a plurality of communication modes.

In one implementation, the content of the communication service may include: a communication service type, a data transmission direction, QoS quality, an error check field identifier, and a corresponding service ID, provided that an established communication channel is corresponding to a transmission demand for the content of the communication service. For example, a communication service with a service ID being 2 includes: a communication service type being mixed audio and video data, a data transmission direction being from the MSF unit to the CDF unit, QoS quality being a high bandwidth and a low delay, and an error check field identifier being not required. A communication channel established for communication service with the service ID being 2 may be named channel B. The channel is for one-way transmission, and is characterized by a high transmission bandwidth, a low delay, a large data amount, ECC check being not required, and data being transmitted in a stream mode. Channel A can be invoked for DP signal transmission. As a DP signal does not require a serializer/deserializer to serve as a bridge at both ends of the communication channel, a DP signal can be directly transmitted from a data transmit end to a signal receive end. FPDlink and GSML are two other alternative types of signals that can be transmitted through channel A. Because FPDlink and GSML are characterized in that a serializer-and-deserializer pair needs to be added between a transmit end and a receive end, this communication channel requires a transmission rate as high as 30 Gbps or more, may have a transmission distance from 0.5 meter to 2 meters, and may transmit mixed video and audio signals. For another example, a communication service with a service ID being 3 and a communication service with a service ID being 4 that are the same as those of the CDF unit may be further included. The communication channel may be further selected based on various modes such as Ethernet in step S102 above.

In one implementation, for the MSF unit to meet the requirements for long-distance data transmission between the MSF unit and the CDF unit, a communication cable used in a communication channel needs to meet the electrical characteristics requirements for automotive use.

In step S203, a communication service is matched from the one or more communication services and a communication channel is invoked from the one or more communication channels for data transmission, in response to a received transmission demand instruction from an upper-layer application, where the communication service and the communication channel are corresponding to the received transmission demand instruction.

In this embodiment, the MSF unit mainly provides computing power, implements a computing function, and transmits response information and control signals from the MSF unit back to the CDF unit. The data being transmitted between the MSF unit and the CDF unit also includes bulk data such as some file transfer data and USB convergence media data. Therefore, a corresponding communication service needs to be matched based on a data transmission demand from an upper-layer application of the MSF unit, thereby invoking a corresponding communication channel to implement data transmission. Specifically, in response to a received transmission demand instruction from the upper-layer application, a transmission requirement of data to be transmitted is obtained; the corresponding communication service is matched and a service ID of the communication service is obtained based on the transmission requirement of the data; and the corresponding communication channel is invoked through the unique service ID, and the data is transmitted to and/or from the CDF unit through the communication channel.

For example, in an artificial intelligence assistant application scenario, the MSF unit needs to generate three-dimensional virtual image data and voice data for response to any inputs received by the artificial intelligence assistant application and transmit them to the CDF unit. In some aspects, before generating three-dimensional virtual image data and voice data for response, the MSF unit further needs to transmit a control signal to the CDF unit and obtains raw audio and video data from the CDF unit. Therefore, when the artificial intelligence assistant application is in use, in response to a transmission demand instruction for transmitting vocal replies made by the artificial intelligence assistant application, the MSF unit needs to transmit a control signal to the CDF unit to obtain raw audio and video data from the CDF unit. The MSF unit provides computing power to process the raw audio and video data that may be collected by the CDF unit, and then transmits the processed data to the CDF unit for output. Therefore, the artificial intelligence assistant application sends a transmission demand instruction to the MSF unit, and the MSF unit parses a transmission requirement of the data, finds a corresponding communication service, and invokes a corresponding communication channel to transmit the control signal and the processed audio and video data.

In one implementation, selection of a communication service is determined based on whether the transmission requirement of data to be transmitted is consistent with content of the communication service. If the transmission requirement of the data is consistent with content of the communication service, then the communication service meets the transmission requirement of data to be transmitted, and a communication channel of the communication service is used for data transmission. If the transmission requirement of the data is not consistent with content of the communication service, searching and matching continue until a communication service that meets the transmission requirement of the data can be found. For example, transmission requirements of audio and video data that are being transmitted by the artificial intelligence assistant application include a large amount of data and the lowest possible delay. The communication service can then be selected based on whether the content of the communication service meets such requirements of a high bandwidth and a low delay.

In accordance with steps S201 to S203 as described above, a communication service independent of an underlying transmission channel can be provided at the multimedia system functional unit side based on the communication transmission requirement to transmit data between the cockpit domain functional unit and the multimedia system functional unit when they are heterogeneously arranged. The communication service can provide a corresponding communication channel to complete data transmission based on a data transmission demand of the upper-layer application, thereby enabling the cockpit domain functional unit and the multimedia system functional units to cooperate with each other to implement computing power sharing and function migration.

Further reference is made to FIG. 3, which is a schematic flowchart of steps of a data transmission method according to an embodiment of the disclosure. As shown in FIG. 3, based on the method in the above embodiment, the data transmission method according to this embodiment of the disclosure may be used by a heterogeneous intelligent cockpit system, where the heterogeneous intelligent cockpit system includes a cockpit domain functional unit and a multimedia system functional unit that are heterogeneously arranged. The method includes step S301 to step S303 as follows:
In step S301, the cockpit domain functional unit or the multimedia system functional unit determines a communication service between the cockpit domain functional unit and the multimedia system functional unit based on a communication transmission requirement between the cockpit domain functional unit and the multimedia system functional unit.
In step S302, a communication channel is established between the cockpit domain functional unit and the multimedia system functional unit based on content of the communication service.
In step S303, a corresponding communication service is matched and a corresponding communication channel is invoked for data transmission, in response to a received transmission demand instruction from an upper-layer application.

In one implementation, the CDF unit and the MSF unit are two different computing units, sensing devices are connected to the CDF unit, and the MSF unit provides computing power and implements a computing function. Data collected by the CDF unit is transmitted to the MSF unit through a forward data transmission channel. In addition, a reverse data transmission channel is used to transmit response information and control signals from the MSF unit to the CDF unit. Due to a huge amount of data collected by the sensing devices, and in order to satisfy real-time and accuracy requirements, the collected data is usually raw data and cannot be encoded before sending. The MSF unit needs to process the raw audio and video data collected by the sensing devices connected to the CDF unit, and then generates three-dimensional virtual image data and voice data for response. The generated three-dimensional virtual image data and voice data needs to be transmitted to the CDF unit through a same high-bandwidth and low-delay channel. In addition to transmission of high-speed multimedia data streams, communication transmission between the CDF unit and the MSF unit also needs to implement two-way transmission of control signals, bulk data transmission, and the like. In order to meet the above communication transmission requirements, a communication service mode independent of an underlying communication mode is established, and a specific communication channel is determined through the communication service, so that when the upper-layer application has a transmission demand, a corresponding underlying communication channel is invoked for data transmission. In this way, the CDF unit and the MSF unit can cooperate with each other to implement computing power sharing and function migration.

For example, the content of the communication services corresponding to each of the established service IDs is shown in Table 1 as follows. Table 1:

| ID | Communication service type | Communication source | Communication destination | QoS quality | Error code check field |
|---|---|---|---|---|---|
| 1 | Video+Audio | CDF | MSF | High bandwidth and low delay | Not required |
| 2 | Video+Audio | MSF | CDF | High bandwidth and low delay | Not required |
| 3 | Bulk | Two-way | Two-way | High bandwidth and high reliability | Required |
| 4 | Control signal | Two-way | Two-way | Low delay and high reliability | Required |
| 5 | Control+Bulk | Two-way | Two-way | Low delay and high reliability | Required |

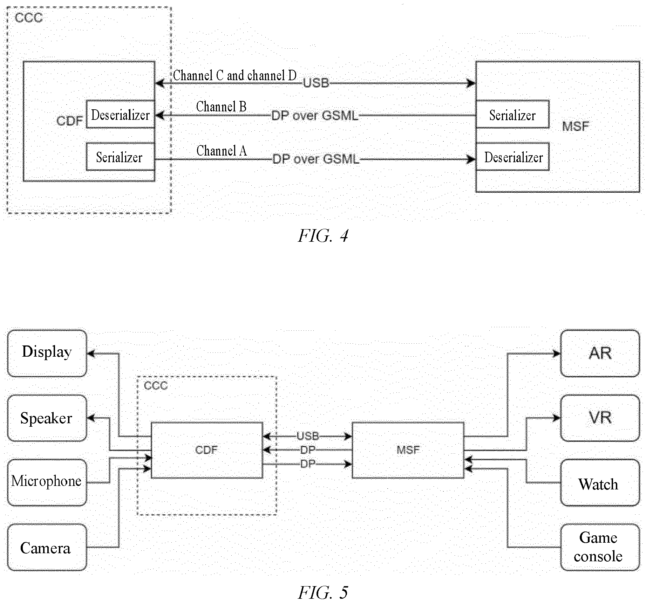

Communication service with a service ID being 1 is used to transmit unencoded audio and video synchronization data from the CDF unit to the MSF unit. Communication service with a service ID being 2 is used to transmit unencoded audio and video synchronization data from the MSF unit to the CDF unit, such as audio and video streams integrated in DP signals, which carry three-dimensional stereoscopic image data and voice data for response. Communication service with a service ID being 3 is used for two-way transmission of a large amount of bulk data between the CDF unit and the MSF unit. Communication service with a service ID being 4 is used for two-way transmission of control signals between the CDF unit and the MSF unit. Communication service with a service ID being 5 transmits control signals or bulk data wirelessly under the condition that the communication service does not support wired transmission. FIG. 4 shows an example process of data exchange between the CDF unit and the MSF unit through a plurality of communication channels. Channel A: The CDF unit transmits raw audio and video signals to the MSF unit through DP or GSML. Channel B: The MSF unit transmits raw audio and video data to the CDF unit through DP or GSML. Channel C: Two-way transmission of bulk data is performed through USB. Channel D: The CDF unit and the MSF unit perform two-way transmission of control signals through USB. Here, channel C and channel D can share one channel, and DP and GSML require a serializer-and-deserializer pair to be added between a transmit end and a receive end. Specifically, channel A may be invoked through communication service with a service ID being 1, channel B may be invoked through communication service with a service ID being 2, channel C or D may be invoked through communication service with a service ID being 3, and channel C or D may also be invoked through communication service with a service ID being 4.

The data transmission between the CDF unit and the MSF unit can be further explained by way of an example data transmission process between a CDF unit and an MSF unit when an artificial intelligence assistant application is in use. FIG. 5 is a block diagram of a physical connection topology between a CDF unit and an MSF unit. The artificial intelligence assistant can be an in-vehicle human-computer interaction system. The artificial intelligence assistant can act like a driving assistant and help vehicle occupants control vehicle functions. A basic artificial intelligence assistant can interact with vehicle occupants by voice. A multi-modal artificial intelligence assistant is an advanced version of a human-computer interaction system. In addition to voice interaction, the multi-modal artificial intelligence assistant may further collect image information of a user of the vehicle through sensors such as cameras and even in-vehicle radars to identify mouth shape, facial expressions, body movements, gestures, etc. of the user. Such a multi-modal perception system can improve listening and understanding of user's commands, emotional appeals, etc. In some senses, the artificial intelligence assistant may be referred to as the core and soul of an intelligent cockpit. Due to the need for computing power allocation, the multi-modal artificial intelligence assistant runs on the MSF unit. Microphones, cameras, speakers, etc., respectively, serve as the "ear", "eye" and "mouth" of the artificial intelligence assistant and are connected to the CDF unit. A display is also connected to the CDF unit, and the display may be used as an image display for presenting the artificial intelligence assistant to a user. When the artificial intelligence assistant application is in use, a data transmission channel needs to be invoked between the CDF unit and the MSF unit to implement two-way data transmission.

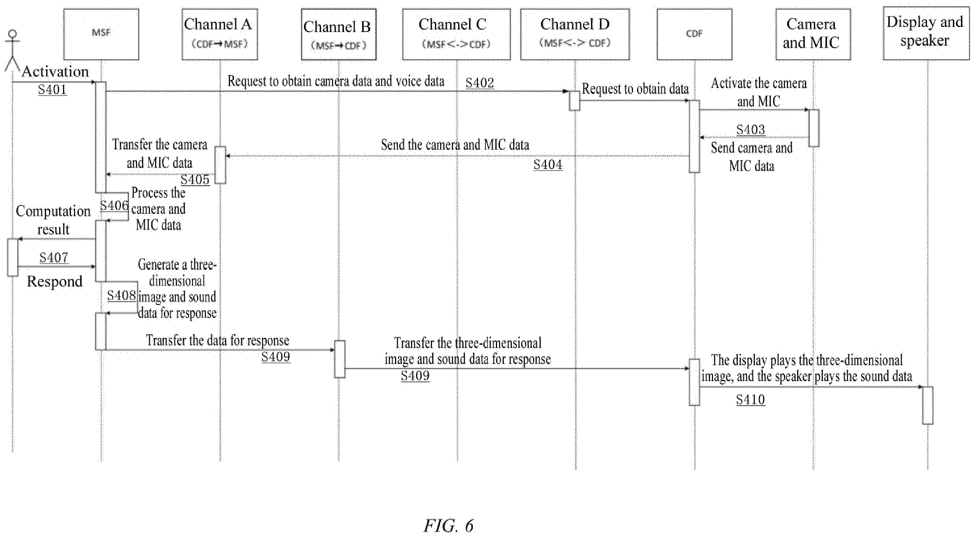

FIG. 6 shows an overall process for control signal and data transmission.

In S401, an in-vehicle artificial intelligence assistant is activated and it runs on an MSF unit. The MSF unit invokes a service layer API (that is, a communication service) and prepares to send a control signal to a CDF unit, where the control signal requires activating a microphone and a camera.

In S402, the MSF unit generates one control signal packet based on the service ID number of the API (see Table 1. The service ID is 4), and call underlying channel D to send the control signal to the CDF unit.

In S403, after receiving the control signal, the CDF unit performs unpacketizing and analysis, to recognize that the camera and the microphone need to be activated. The CDF unit sends an activation command to the camera and the microphone through an internal invocation interface. In response to the activation command, the camera and the microphone send data collected by the camera and the microphone to the CDF unit.

In S404, after receiving the data, the CDF unit first mixes a video signal from the camera and an audio signal from the microphone. After processing by an internal audio and video synchronization module, a mixed signal is generated.

In S405, the CDF unit sends mixed audio and video data to the MSF unit. The CDF unit invokes the service layer API, requests a communication service based on the service ID number of type 1 communication, and obtains channel A with a data transmission direction from the CDF unit to the MSF unit. Through channel A, the CDF unit transmits mixed audio and video data to the MSF unit.

In S406, after receiving the mixed signal, the MSF unit performs audio and video decomposition to obtain the raw audio and the video data. The data is processed by different program modules of the MSF unit. Because of a demand of the multi-modal artificial intelligence assistant, a video processing module and an audio processing module of the MSF unit may be separately invoked for analysis and computation.

In S407, the MSF unit generates a computation result and outputs vocal commands, facial expressions, and/or emotions recognition results of a user of the vehicle to the in-vehicle multi-modal artificial intelligence assistant, and the artificial intelligence assistant generates responses to such input and transmits the responses back to the MSF unit.

In S408, the MSF unit generates a three-dimensional virtual image of the artificial intelligence assistant and sound data for the received response, and performs audio and video synchronous mixing.

In S409, the MSF invokes the API, requests a communication service based on the service ID number of type 2 communication service, and obtains channel B with a data transmission direction from the MSF unit to the CDF unit. Through channel B, the MSF unit sends mixed audio and video data to the CDF unit.

In S410, after receiving the data, the CDF unit first decomposes the data to obtain a video stream and an audio stream. For the video stream, the CDF unit invokes a display for display. For the audio stream, the CDF unit invokes an audio system for playback.

The above example is one example of how the transmission mechanism as described herein between the MSF unit and the CDF unit could be used to realize data transmission in a certain application scenario. The transmission mechanism between the MSF unit and the CDF unit can be implemented in other application scenarios.

In accordance with steps S301 to S303 as described above, a communication service independent of an underlying transmission channel is provided based on the communication transmission requirement to transmit data between the cockpit domain functional unit and the multimedia system functional unit when they are heterogeneously arranged. The communication service can provide a corresponding communication channel to complete data transmission based on demands of the upper-layer application, thereby enabling the cockpit domain functional unit and the multimedia system functional units to cooperate with each other to implement computing power sharing and function migration.

It should be noted that, although the steps are described in a specific order in the above embodiments, those skilled in the art may understand that in order to implement the effects of the disclosure, different steps are not necessarily performed in such an order, but may be performed simultaneously (in parallel) or in other orders, and these changes shall all fall within the scope of protection of the invention as long as said changes are encompassed within the scope of the appended claims.

Further, the disclosure further provides a data transmission apparatus, including a memory, one or more processors, and one or more application programs, where the one or more application programs are stored in the memory, and the one or more application programs are configured to be invoked by the one or more processors, the one or more processors are caused to perform the method described in any of the above technical solutions.

The apparatus in this embodiment of the disclosure mainly includes a memory and a processor. The memory may be configured to store a program for performing the data transmission method in the above method embodiments, and the processor may be configured to execute a program in the memory. The program includes, but is not limited, to the program for performing the data transmission method in the above method embodiments. For ease of description, only parts related to the embodiments of the disclosure are shown. For specific technical details that are not disclosed, reference may be made to the method part of the embodiments of the disclosure.

The data transmission apparatus in this embodiment of the disclosure may be a control apparatus formed by various electronic devices. In some possible implementations, the apparatus may include a plurality of storage apparatuses and a plurality of processors. The program for performing the data transmission method in the above method embodiments may be divided into a plurality of subprograms, and each subprogram may be loaded and run by the processor to perform different steps of the data transmission method in the above method embodiments. Specifically, each subprogram may be stored in a different memory, and each processor may be configured to execute programs in one or more memories to jointly implement the data transmission method in the above method embodiments. In other words, each processor separately performs different steps of the data transmission method in the above method embodiments to jointly implement the data transmission method in the above method embodiments.

The plurality of processors may be processors deployed on a same device. For example, the computer device may be a high-performance device including a plurality of processors, and the plurality of processors may be processors configured on the high-performance device. In addition, the plurality of processors may alternatively be processors deployed on different devices. For example, the above computer device may be a server cluster, and the plurality of processors may be processors on different servers in the server cluster.

The data transmission apparatus is used to implement the embodiments of the data transmission method shown in FIG. 1 or FIG. 2. The technical principles of, technical problems solved by, and technical effects provided by the data transmission apparatus and the data transmission method are similar, and those skilled in the art can clearly understand that, for ease and simplicity of description, for a specific process and a related description of the data transmission apparatus, reference may be made to the content described in the embodiments of the data transmission method, which will not be repeated herein.

Those skilled in the art can understand that all or some of the procedures in the method of the above embodiment of the disclosure may also be implemented by a computer program instructing relevant hardware. The computer program may be stored in a computer-readable storage medium, and when the computer program is executed by a processor, the steps of the above method embodiments may be implemented. The computer program includes computer program code, which may be in a source code form, an object code form, an executable file form, some intermediate forms, or the like. The computer-readable storage medium may include: any entity or apparatus that can carry the computer program code, a medium, a USB flash drive, a removable hard disk, a magnetic disk, an optical disc, a computer memory, a read-only memory, a random access memory, an electric carrier signal, a telecommunications signal, and a software distribution medium. It should be noted that the content included in the computer-readable storage medium may be appropriately added or deleted depending on requirements of the legislation and patent practice in a jurisdiction. For example, in some jurisdictions, according to the legislation and patent practice, the computer-readable storage medium does not include an electric carrier signal and a telecommunications signal.

Further, the disclosure further provides a data transmission system, including a cockpit domain functional unit and a multimedia system functional unit, and the cockpit domain functional unit and the multimedia system functional unit are heterogeneously arranged. The cockpit domain functional unit is configured to perform the method described in steps S101 to S103 above. The multimedia system functional unit is configured to perform the method described in steps S201 to S203.

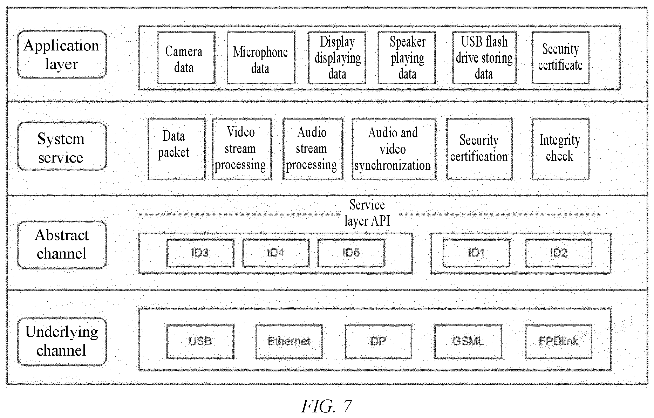

In one implementation, as shown in FIG. 7, a data transmission system independent of an underlying communication channel is established. An abstract channel corresponds to a communication service, as shown in Table 1 above. Based on a demand of an upper-layer application, for example, audio and video data transmission and USB flash drive data storage, the data transmission system, in addition to system services provided by the system itself such as data processing, can provide a specific communication service and invoke an underlying channel through a service ID of the communication service to implement data transmission and exchange.

Further, the disclosure further provides a vehicle including the data transmission apparatus according to the above embodiment. For ease of description, only parts related to the embodiments of the disclosure are shown. For specific technical details that are not disclosed, reference may be made to the method part of the embodiments of the disclosure.

Further, the disclosure further provides a control apparatus. In an embodiment of the control apparatus according to the disclosure, the control apparatus includes a processor and a storage apparatus. The storage apparatus may be configured to store a program for performing the data transmission method in the above method embodiments. The processor may be configured to execute a program in the storage apparatus, where the program includes, but is not limited to, the program for performing the data transmission method in the above method embodiments. For ease of description, only parts related to the embodiments of the disclosure are shown. For specific technical details that are not disclosed, reference may be made to the method part of the embodiments of the disclosure. The control apparatus may be a control apparatus formed by various electronic devices.

Further, the disclosure further provides a computer-readable storage medium. In a computer-readable storage medium embodiment according to the disclosure, the computer-readable storage medium may be configured to store a program for performing the data transmission method in the above method embodiments, and the program may be loaded and executed by a processor to implement the above data transmission method. For ease of description, only parts related to the embodiments of the disclosure are shown. For specific technical details that are not disclosed, reference may be made to the method part of the embodiments of the disclosure. The computer-readable storage medium may be a storage apparatus formed by various electronic devices. Optionally, the computer-readable storage medium in the embodiment of the disclosure is a non-transitory computer-readable storage medium.

Further, it should be understood that, because the configuration of modules is merely intended to illustrate function modules of the apparatus in the disclosure, physical devices corresponding to these modules may be a processor itself, or part of software, part of hardware, or part of a combination of software and hardware in the processor. Therefore, the number of modules in the figure is merely illustrative.

Those skilled in the art can understand that the modules in the apparatus may be adaptively split or merged. Therefore, technical solutions after any such split or combination shall all fall within the scope of protection of the invention insofar any such split or combination falls within the scope of the invention as defined by the appended claims.

Heretofore, the technical solutions of the disclosure have been described with reference to the preferred implementations shown in the accompanying drawings. However, those skilled in the art can readily understand that the scope of protection of the invention is apparently not limited to these specific implementations. Those skilled in the art may make equivalent changes or substitutions to the related technical features without departing from the scope of the invention as defined by the appended claims, and all the technical solutions with such changes or substitutions shall fall within the scope of the invention as far as such changes or substitutions do not depart from the scope of the invention as defined by the appended claims.

## Claims

1. A data transmission method, used by a cockpit domain functional (CDF) unit of a heterogeneous intelligent cockpit system, wherein the heterogeneous intelligent cockpit system further comprises a multimedia system functional (MSF) unit, and wherein the cockpit domain functional (CDF) unit and the multimedia system functional (MSF) unit are heterogeneously arranged, the method comprising:
determining (S101) one or more communication services with the multimedia system functional (MSF) unit based on a communication transmission requirement with the multimedia system functional (MSF) unit;
establishing (S102) one or more communication channels to the multimedia system functional (MSF) unit based on content of the one or more communication services, wherein the one or more communication channels are corresponding to the one or more communication services; and
matching (S103) a communication service from the one or more communication services and invoking a communication channel from the one or more communication channels for data transmission, in response to a received transmission demand instruction from an upper-layer application of the cockpit domain functional unit (CDF) or the multimedia system functional unit (MSF),
wherein the matched communication service and the invoked communication channel are corresponding to the received transmission demand instruction,
wherein the communication transmission requirement comprises: a requirement for a communication service type, a requirement for a data transmission direction, a requirement for QoS quality, and a requirement for an error check; and
content of each of the one or more communication services comprises a communication service type, a data transmission direction, QoS quality, and an error check field identifier that are corresponding to the communication transmission requirement; and each of the one or more communication services corresponds to a unique service ID, and the communication channel corresponding to the communication service is invoked through the unique service ID.

2. The data transmission method according to claim 1, wherein the communication service type comprises at least one of audio and video data, a control signal, and bulk data; the data transmission direction comprises a communication source and a communication destination; the QoS quality comprises a delay, a bandwidth, and reliability; and the error check field identifier comprises an error code check being required or the error code check being not required.

3. The data transmission method according to claim 1 or 2, further comprising:
in response to the received transmission demand instruction from the upper-layer application, obtaining a transmission requirement of data to be transmitted;
matching the communication service based on the transmission requirement of data to be transmitted and obtaining the unique service ID of the communication service; and
invoking the communication channel that is corresponding to the unique service ID, and transmitting data to be transmitted to and/or from the multimedia system functional (MSF) unit through the invoked communication channel.

4. The data transmission method according to claim 3, further comprising: determining whether the transmission requirement of data to be transmitted is consistent with content of the communication service that is to be matched based on the transmission requirement of data to be transmitted, if the transmission requirement of data to be transmitted is consistent with content of the communication service that is to be matched based on the transmission requirement of data to be transmitted, determining that the communication service that is to be matched based on the transmission requirement of data to be transmitted meets the transmission requirement of data to be transmitted, and if the transmission requirement of data to be transmitted is not consistent with content of the communication service that is to be matched based on the transmission requirement of data to be transmitted, continuing matching and searching for another communication service that meets the transmission requirement of data to be transmitted.

5. The data transmission method according to any one of claims 1 to 4, wherein the communication transmission requirement further comprises a requirement for long-distance data transmission.

6. A data transmission method, used by a multimedia system functional (MSF) unit of a heterogeneous intelligent cockpit system, wherein the heterogeneous intelligent cockpit system further comprises a cockpit domain functional (CDF) unit, and wherein the cockpit domain functional (CDF) unit and the multimedia system functional (MSF) unit are heterogeneously arranged, the method comprising:
determining (S201) one or more communication services with the cockpit domain functional (CDF) unit based on a communication transmission requirement with the cockpit domain functional unit;
establishing (S202) one or more communication channels to the cockpit domain functional (CDF) unit based on content of the one or more communication services; and
matching (S203) a communication service from the one or more communication services and invoking a communication channel from the one or more communication channels for data transmission, in response to a received transmission demand instruction from an upper-layer application of the cockpit domain functional unit (CDF) or the multimedia system functional unit (MSF),
wherein the communication service and the communication channel are corresponding to the received transmission demand instruction,
wherein the communication transmission requirement comprises: a requirement for a communication service type, a requirement for data transmission direction, a requirement for QoS quality, and a requirement for an error check; and
content of each of the one or more communication services comprises a communication service type, a data transmission direction, QoS quality, and an error check field identifier that are corresponding to the communication transmission requirement; and each of the one or more communication services corresponds to a unique service ID, and the communication channel corresponding to the communication service is invoked through the unique service ID.

7. The data transmission method according to claim 6, wherein the communication service type comprises at least one of audio and video data, a control signal, and bulk data; the data transmission direction comprises a communication source and a communication destination; the QoS quality comprises a delay, a bandwidth, and reliability; and the error check field identifier comprises an error code check being required or the error code check being not required.

8. The data transmission method according to claim 6 or 7, further comprising:
in response to the received transmission demand instruction from the upper-layer application, obtaining a transmission requirement of data to be transmitted;
matching the communication service based on the transmission requirement of data to be transmitted and obtaining the unique service ID of the communication service; and
invoking the communication channel that is corresponding to the unique service ID, and transmitting data to be transmitted to and/or from the cockpit domain functional (CDF) unit through the invoked communication channel.

9. The data transmission method according to claim 8, further comprising: determining whether the transmission requirement of data to be transmitted is consistent with content of the communication service that is to be matched based on the transmission requirement of data to be transmitted, if the transmission requirement of data to be transmitted is consistent with content of the communication service that is to be matched based on the transmission requirement of data to be transmitted, determining that the communication service that is to be matched based on the transmission requirement of data to be transmitted meets the transmission requirement of data to be transmitted, and if the transmission requirement of data to be transmitted is not consistent with content of the communication service that is to be matched based on the transmission requirement of data to be transmitted, continuing matching and searching for another communication service that meets the transmission requirement of data to be transmitted.

10. The data transmission method according to any one of claims 6 to 9, wherein the communication transmission requirement further comprises a requirement for long-distance data transmission.

11. A vehicle comprising a data transmission system including a cockpit domain functional (CDF) unit and a multimedia system functional (MSF) unit, the cockpit domain functional unit and the multimedia system functional unit being heterogeneously arranged, wherein
the cockpit domain functional (CDF) unit is configured to perform a method according to any one of claims 1 to 5; and
the multimedia system functional (MSF) unit is configured to perform a method according to any one of claims 6 to 10.

## Patentansprüche

1. Datenübertragungsverfahren, das von einer Cockpitbereichsfunktions(CDF)-Einheit eines heterogenen intelligenten Cockpitsystems verwendet wird, wobei das heterogene intelligente Cockpitsystem ferner eine Multimediasystemfunktions(MSF)-Einheit umfasst, und wobei die Cockpitbereichsfunktions(CDF)-Einheit und die Multimediasystemfunktions(MSF)-Einheit heterogen angeordnet sind, wobei das Verfahren Folgendes umfasst:
Bestimmen (S101) eines oder mehrerer Kommunikationsdienste mit der Multimediasystemfunktions(MSF)-Einheit basierend auf einer Kommunikationsübertragungsanforderung mit der Multimediasystemfunktions(MSF)-Einheit;
Herstellen (S102) eines oder mehrerer Kommunikationskanäle zu der Multimediasystemfunktions(MSF)-Einheit basierend auf einem Inhalt des einen oder der mehreren Kommunikationsdienste, wobei der eine oder die mehreren Kommunikationskanäle dem einen oder den mehreren Kommunikationsdiensten entsprechen; und
Zuordnen (S103) eines Kommunikationsdienstes aus dem einen oder den mehreren Kommunikationsdiensten und Aufrufen eines Kommunikationskanals aus dem einen oder den mehreren Kommunikationskanälen zur Datenübertragung als Reaktion auf eine empfangene Übertragungsaufforderungsanweisung von einer Anwendung einer oberen Schicht der Cockpitbereichsfunktionseinheit (CDF) oder der Multimediasystemfunktionseinheit (MSF), wobei der zugeordnete Kommunikationsdienst und der aufgerufene Kommunikationskanal der empfangenen Übertragungsaufforderungsanweisung entsprechen,
wobei die Kommunikationsübertragungsanforderung Folgendes umfasst: eine Anforderung für eine Kommunikationsdienstart, eine Anforderung für eine Datenübertragungsrichtung, eine Anforderung für eine QoS-Qualität und eine Anforderung für eine Fehlerprüfung; und
wobei ein Inhalt jedes des einen oder der mehreren Kommunikationsdienste eine Kommunikationsdienstart, eine Datenübertragungsrichtung, eine QoS-Qualität und eine Fehlerprüfungsfeldkennung umfasst, die der Kommunikationsübertragungsanforderung entsprechen; und wobei jeder des einen oder der mehreren Kommunikationsdienste einer eindeutigen Dienst-ID entspricht, und der Kommunikationskanal, der dem Kommunikationsdienst entspricht, über die eindeutige Dienst-ID aufgerufen wird.

2. Datenübertragungsverfahren nach Anspruch 1, wobei die Kommunikationsdienstart mindestens eines von Audio- und Videodaten, einem Steuersignal und Massendaten umfasst; wobei die Datenübertragungsrichtung eine Kommunikationsquelle und ein Kommunikationsziel umfasst; wobei die QoS-Qualität eine Verzögerung, eine Bandbreite und eine Zuverlässigkeit umfasst; und wobei die Fehlerprüfungsfeldkennung umfasst, dass eine Fehlercodeprüfung erforderlich ist oder die Fehlercodeprüfung nicht erforderlich ist.

3. Datenübertragungsverfahren nach Anspruch 1 oder 2, ferner umfassend:
als Reaktion auf die empfangene Übertragungsaufforderungsanweisung von der Anwendung einer oberen Schicht, Erhalten einer Übertragungsanforderung von zu übertragenden Daten;
Zuordnen des Kommunikationsdienstes basierend auf der Übertragungsanforderung von zu übertragenden Daten und Erhalten der eindeutigen Dienst-ID des Kommunikationsdienstes; und
Aufrufen des Kommunikationskanals, der der eindeutigen Dienst-ID entspricht, und Übertragen von zu übertragenden Daten an und/oder von der Multimediasystemfunktions(MSF)-Einheit über den aufgerufenen Kommunikationskanal.

4. Datenübertragungsverfahren nach Anspruch 3, ferner umfassend: Bestimmen, ob die Übertragungsanforderung von zu übertragenden Daten mit einem Inhalt des Kommunikationsdienstes, der basierend auf der Übertragungsanforderung von zu übertragenden Daten zugeordnet werden soll, konsistent ist, wenn die Übertragungsanforderung von zu übertragenden Daten mit einem Inhalt des Kommunikationsdienstes, der basierend auf der Übertragungsanforderung von zu übertragenden Daten zugeordnet werden soll, konsistent ist, Bestimmen, dass der Kommunikationsdienst, der basierend auf der Übertragungsanforderung von zu übertragenden Daten zugeordnet werden soll, die Übertragungsanforderung von zu übertragenden Daten erfüllt, und wenn die Übertragungsanforderung von zu übertragenden Daten mit einem Inhalt des Kommunikationsdienstes, der basierend auf der Übertragungsanforderung von zu übertragenden Daten zugeordnet werden soll, nicht konsistent ist, Fortfahren mit einem Zuordnen und Suchen nach einem anderen Kommunikationsdienst, der die Übertragungsanforderung von zu übertragenden Daten erfüllt.

5. Datenübertragungsverfahren nach einem der Ansprüche 1 bis 4, wobei die Kommunikationsübertragungsanforderung ferner eine Anforderung für eine Langstreckendatenübertragung umfasst.

6. Datenübertragungsverfahren, das von einer Multimediasystemfunktions(MSF)-Einheit eines heterogenen intelligenten Cockpitsystems verwendet wird, wobei das heterogene intelligente Cockpitsystem ferner eine Cockpitbereichsfunktions(CDF)-Einheit umfasst, und wobei die Cockpitbereichsfunktions(CDF)-Einheit und die Multimediasystemfunktions(MSF)-Einheit heterogen angeordnet sind, wobei das Verfahren Folgendes umfasst:
Bestimmen (S201) eines oder mehrerer Kommunikationsdienste mit der Cockpitbereichsfunktions(CDF)-Einheit basierend auf einer Kommunikationsübertragungsanforderung mit der Cockpitbereichsfunktionseinheit;
Herstellen (S202) eines oder mehrerer Kommunikationskanäle zu der Cockpitbereichsfunktions(CDF)-Einheit basierend auf einem Inhalt des einen oder der mehreren Kommunikationsdienste; und
Zuordnen (S203) eines Kommunikationsdienstes aus dem einen oder den mehreren Kommunikationsdiensten und Aufrufen eines Kommunikationskanals aus dem einen oder den mehreren Kommunikationskanäle zur Datenübertragung als Reaktion auf eine empfangene Übertragungsaufforderungsanweisung von einer Anwendung einer oberen Schicht der Cockpitbereichsfunktionseinheit (CDF) oder der Multimediasystemfunktionseinheit (MSF),
wobei der Kommunikationsdienst und der Kommunikationskanal der empfangenen Übertragungsaufforderungsanweisung entsprechen,
wobei die Kommunikationsübertragungsanforderung Folgendes umfasst: eine Anforderung für eine Kommunikationsdienstart, eine Anforderung für eine Datenübertragungsrichtung, eine Anforderung für eine QoS-Qualität und eine Anforderung für eine Fehlerprüfung; und
wobei ein Inhalt jedes des einen oder der mehreren Kommunikationsdienste eine Kommunikationsdienstart, eine Datenübertragungsrichtung, eine QoS-Qualität und eine Fehlerprüfungsfeldkennung umfasst, die der Kommunikationsübertragungsanforderung entsprechen; und wobei jeder des einen oder der mehreren Kommunikationsdienste einer eindeutigen Dienst-ID entspricht, und der Kommunikationskanal, der dem Kommunikationsdienst entspricht, über die eindeutige Dienst-ID aufgerufen wird.

7. Datenübertragungsverfahren nach Anspruch 6, wobei die Kommunikationsdienstart mindestens eines von Audio- und Videodaten, einem Steuersignal und Massendaten umfasst; wobei die Datenübertragungsrichtung eine Kommunikationsquelle und ein Kommunikationsziel umfasst; wobei die QoS-Qualität eine Verzögerung, eine Bandbreite und eine Zuverlässigkeit umfasst; und wobei die Fehlerprüfungsfeldkennung umfasst, dass eine Fehlercodeprüfung erforderlich ist oder die Fehlercodeprüfung nicht erforderlich ist.

8. Datenübertragungsverfahren nach Anspruch 6 oder 7, ferner umfassend:
als Reaktion auf die empfangene Übertragungsaufforderungsanweisung von der Anwendung einer oberen Schicht, Erhalten einer Übertragungsanforderung von zu übertragenden Daten;
Zuordnen des Kommunikationsdienstes basierend auf der Übertragungsanforderung von zu übertragenden Daten und Erhalten der eindeutigen Dienst-ID des Kommunikationsdienstes; und
Aufrufen des Kommunikationskanals, der der eindeutigen Dienst-ID entspricht, und Übertragen von zu übertragenden Daten an und/oder von der Cockpitbereichsfunktions(CDF)-Einheit über den aufgerufenen Kommunikationskanal.

9. Datenübertragungsverfahren nach Anspruch 8, ferner umfassend: Bestimmen, ob die Übertragungsanforderung von zu übertragenden Daten mit einem Inhalt des Kommunikationsdienstes, der basierend auf der Übertragungsanforderung von zu übertragenden Daten zugeordnet werden soll, konsistent ist, wenn die Übertragungsanforderung von zu übertragenden Daten mit einem Inhalt des Kommunikationsdienstes, der basierend auf der Übertragungsanforderung von zu übertragenden Daten zugeordnet werden soll, konsistent ist, Bestimmen, dass der Kommunikationsdienst, der basierend auf der Übertragungsanforderung von zu übertragenden Daten zugeordnet werden soll, die Übertragungsanforderung von zu übertragenden Daten erfüllt, und wenn die Übertragungsanforderung von zu übertragenden Daten mit einem Inhalt des Kommunikationsdienstes, der basierend auf der Übertragungsanforderung von zu übertragenden Daten zugeordnet werden soll, nicht konsistent ist, Fortfahren mit einem Zuordnen und Suchen nach einem anderen Kommunikationsdienst, der die Übertragungsanforderung von zu übertragenden Daten erfüllt.

10. Datenübertragungsverfahren nach einem der Ansprüche 6 bis 9, wobei die Kommunikationsübertragungsanforderung ferner eine Anforderung für eine Langstreckendatenübertragung umfasst.

11. Fahrzeug, umfassend ein Datenübertragungssystem, das eine Cockpitbereichsfunktions(CDF)-Einheit und eine Multimediasystemfunktions(MSF)-Einheit umfasst, wobei die Cockpitbereichsfunktionseinheit und die Multimediasystemfunktionseinheit heterogen angeordnet sind, wobei
die Cockpitbereichsfunktions(CDF)-Einheit dazu konfiguriert ist, ein Verfahren nach einem der Ansprüche 1 bis 5 durchzuführen; und
die Multimediasystemfunktions(MSF)-Einheit dazu konfiguriert ist, ein Verfahren nach einem der Ansprüche 6 bis 10 durchzuführen.

## Revendications

1. Procédé de transmission de données, utilisé par une unité fonctionnelle de domaine de cockpit (CDF) d'un système de cockpit intelligent hétérogène, dans lequel le système de cockpit intelligent hétérogène comprend une unité fonctionnelle de système multimédia (MSF), et dans lequel l'unité fonctionnelle de domaine de cockpit (CDF) et l'unité fonctionnelle de système multimédia (MSF) sont agencées de manière hétérogène, le procédé comprenant :
la détermination (S101) d'un ou plusieurs services de communication avec l'unité fonctionnelle de système multimédia (MSF) sur la base d'une exigence de transmission de communication avec l'unité fonctionnelle de système multimédia (MSF) ;
l'établissement (S102) d'un ou plusieurs canaux de communication vers l'unité fonctionnelle de système multimédia (MSF) sur la base d'un contenu des un ou plusieurs services de communication, dans lequel les un ou plusieurs canaux de communication correspondent aux un ou plusieurs services de communication ; et
la mise en correspondance (S103) d'un service de communication des un ou plusieurs services de communication et l'appel d'un canal de communication des un ou plusieurs canaux de communication pour une transmission de données, en réponse à une instruction de demande de transmission reçue en provenance d'une application de couche supérieure de l'unité fonctionnelle de domaine de cockpit (CDF) ou de l'unité fonctionnelle de système multimédia (MSF), dans lequel le service de communication mis en correspondance et le canal de communication appelé correspondent à l'instruction de demande de transmission reçue,
dans lequel l'exigence de transmission de communication comprend : une exigence pour un type de service de communication, une exigence pour une direction de transmission de données, une exigence pour une qualité QoS, et une exigence pour un contrôle d'erreur ; et
le contenu de chacun des un ou plusieurs services de communication comprend un type de service de communication, une direction de transmission de données, une qualité QoS, et un identifiant de champ de contrôle d'erreur qui correspondent à l'exigence de transmission de communication ; et chacun des un ou plusieurs services de communication correspond à un ID de service unique, et le canal de communication correspondant au service de communication est appelé par l'intermédiaire de l'ID de service unique.

2. Procédé de transmission de données selon la revendication 1, dans lequel le type de service de communication comprend au moins un élément parmi des données audio et vidéo, un signal de commande, et des données en masse ; la direction de transmission de données comprend une source de communication et une destination de communication ; la qualité QoS comprend un retard, une largeur de bande, et une fiabilité ; et l'identifiant de champ de contrôle d'erreur comprend le fait qu'un contrôle de code d'erreur est requis ou que le contrôle de code d'erreur n'est pas requis.

3. Procédé de transmission de données selon la revendication 1 ou 2, comprenant en outre :
en réponse à l'instruction de demande de transmission reçue en provenance de l'application de couche supérieure, l'obtention d'une exigence de transmission de données à transmettre ;
la mise en correspondance du service de communication sur la base de l'exigence de transmission de données à transmettre et l'obtention de l'ID de service unique du service de communication ; et
l'appel du canal de communication qui correspond à l'ID de service unique, et la transmission de données à transmettre à et/ou depuis l'unité fonctionnelle de système multimédia (MSF) par l'intermédiaire du canal de communication appelé.

4. Procédé de transmission de données selon la revendication 3, comprenant en outre :
le fait de déterminer si l'exigence de transmission de données à transmettre est cohérente avec le contenu du service de communication qui doit être mis en correspondance sur la base de l'exigence de transmission de données à transmettre, si l'exigence de transmission de données à transmettre est cohérente avec le contenu du service de communication qui doit être mis en correspondance sur la base de l'exigence de transmission de données à transmettre, la détermination du fait que le service de communication qui doit être mis en correspondance sur la base de l'exigence de transmission de données à transmettre satisfait l'exigence de transmission de données à transmettre, et si l'exigence de transmission de données à transmettre n'est pas cohérente avec le contenu du service de communication qui doit être mis en correspondance sur la base de l'exigence de transmission de données à transmettre, le fait de continuer la mise en correspondance et la recherche d'un autre service de communication qui satisfait l'exigence de transmission de données à transmettre.

5. Procédé de transmission de données selon l'une quelconque des revendications 1 à 4, dans lequel l'exigence de transmission de communication comprend en outre une exigence de transmission de données à longue distance.

6. Procédé de transmission de données, utilisé par une unité fonctionnelle de système multimédia (MSF) d'un système de cockpit intelligent hétérogène, dans lequel le système de cockpit intelligent hétérogène comprend en outre une unité fonctionnelle de domaine de cockpit (CDF), et dans lequel l'unité fonctionnelle de domaine de cockpit (CDF) et l'unité fonctionnelle de système multimédia (MSF) sont agencées de manière hétérogène, le procédé comprenant :
la détermination (S201) d'un ou plusieurs services de communication avec l'unité fonctionnelle de domaine de cockpit (CDF) sur la base d'une exigence de transmission de communication avec l'unité fonctionnelle de domaine de cockpit ;
l'établissement (S202) d'un ou plusieurs canaux de communication vers l'unité fonctionnelle de domaine de cockpit (CDF) sur la base d'un contenu des un ou plusieurs services de communication ; et
la mise en correspondance (S203) d'un service de communication des un ou plusieurs services de communication et l'appel d'un canal de communication des un ou plusieurs canaux de communication pour une transmission de données, en réponse à une instruction de demande de transmission reçue en provenance d'une application de couche supérieure de l'unité fonctionnelle de domaine de cockpit (CDF) ou de l'unité fonctionnelle de système multimédia (MSF),
dans lequel le service de communication et le canal de communication correspondent à l'instruction de demande de transmission reçue,
dans lequel l'exigence de transmission de communication comprend : une exigence pour un type de service de communication, une exigence pour une direction de transmission de données, une exigence pour une qualité QoS, et une exigence pour un contrôle d'erreur ; et
le contenu de chacun des un ou plusieurs services de communication comprend un type de service de communication, une direction de transmission de données, une qualité QoS, et un identifiant de champ de contrôle d'erreur qui correspondent à l'exigence de transmission de communication ; et chacun des un ou plusieurs services de communication correspond à un ID de service unique, et le canal de communication correspondant au service de communication est appelé par l'intermédiaire de l'ID de service unique.

7. Procédé de transmission de données selon la revendication 6, dans lequel le type de service de communication comprend au moins un élément parmi des données audio et vidéo, un signal de commande, et des données en masse ; la direction de transmission de données comprend une source de communication et une destination de communication ; la qualité QoS comprend un retard, une largeur de bande, et une fiabilité ; et l'identifiant de champ de contrôle d'erreur comprend le fait qu'un contrôle de code d'erreur est requis ou que le contrôle de code d'erreur n'est pas requis.

8. Procédé de transmission de données selon la revendication 6 ou 7, comprenant en outre :
en réponse à l'instruction de demande de transmission reçue en provenance de l'application de couche supérieure, l'obtention d'une exigence de transmission de données à transmettre ;
la mise en correspondance du service de communication sur la base de l'exigence de transmission de données à transmettre et l'obtention de l'ID de service unique du service de communication ; et
l'appel du canal de communication qui correspond à l'ID de service unique, et la transmission de données à transmettre à et/ou depuis l'unité fonctionnelle de domaine de cockpit (CDF) par l'intermédiaire du canal de communication appelé.

9. Procédé de transmission de données selon la revendication 8, comprenant en outre : le fait de déterminer si l'exigence de transmission de données à transmettre est cohérente avec le contenu du service de communication qui doit être mis en correspondance sur la base de l'exigence de transmission de données à transmettre, si l'exigence de transmission de données à transmettre est cohérente avec le contenu du service de communication qui doit être mis en correspondance sur la base de l'exigence de transmission de données à transmettre, la détermination du fait que le service de communication qui doit être mis en correspondance sur la base de l'exigence de transmission de données à transmettre satisfait l'exigence de transmission de données à transmettre, et si l'exigence de transmission de données à transmettre n'est pas cohérente avec le contenu du service de communication qui doit être mis en correspondance sur la base de l'exigence de transmission de données à transmettre, le fait de continuer la mise en correspondance et la recherche d'un autre service de communication qui satisfait l'exigence de transmission de données à transmettre.

10. Procédé de transmission de données selon l'une quelconque des revendications 6 à 9, dans lequel l'exigence de transmission de communication comprend en outre une exigence de transmission de données à longue distance.

11. Véhicule comprenant un système de transmission de données incluant une unité fonctionnelle de domaine de cockpit (CDF) et une unité fonctionnelle de système multimédia (MSF), l'unité fonctionnelle de domaine de cockpit et l'unité fonctionnelle de système multimédia étant agencées de manière hétérogène, dans lequel
l'unité fonctionnelle de domaine de cockpit (CDF) est configurée pour mettre en œuvre un procédé selon l'une quelconque des revendications 1 à 5 ; et
l'unité fonctionnelle de système multimédia (MSF) est configurée pour mettre en œuvre un procédé selon l'une quelconque des revendications 6 à 10.
